# EUROPÄISCHE PATENTANMELDUNG

(11) **EP 0 585 850 A1**
(43) Veröffentlichungstag der Anmeldung: **09.03.1994**
(21) Anmeldenummer: 93113831.7
(22) Anmeldetag: 30.08.1993
(51) Int. Cl.: B29C 43/36, B29C 43/58, B30B 11/00

(54) **Pressform zur Herstellung eines Formteiles**

(30) Priorität: 03.09.1992 DE 4229422; 15.07.1993 DE 4323668
(71) Anmelder: ABB PATENT GmbH, D-68309 Mannheim (DE)
(72) Erfinder: Esslinger, Heinrich, D-69412 Eberbach (DE)
(74) Vertreter: Rupprecht, Klaus, Dipl.-Ing.

(57) **Zusammenfassung**

Ein Preßformwerkzeug (10) zur Herstellung eines Formteiles, insbesondere eines Gehäuses, aus einer aushärtbaren, fließfähigen Formmasse (14), besitzt ein Werkzeugunterteil (11) und ein Werkzeugoberteil (12), die zwischen sich einen dem Formteil entsprechenden, im wesentlichen abgedichteten Formraum (13) freilassen. In diesen Formraum (14) wird die fließfähige, aushärtbare, ggf. mit Füllmaterial vermischte Formmasse eingefügt, die in dem geschlossenen Preßformwerkzeug (10) aushärtet. Zur Erzeugung eines bestimmten Druckes in der Formmasse (14) ist im Werkzeugunter- und/oder -oberteil (11, 12; 20) eine in Richtung der Trennbewegung (T) des Werkzeugunter- und - oberteils (11, 12; 20) gegeneinander verlaufende Öffnung (21) vorgesehen, in der ein Kolben (22) geführt ist, der beim Formvorgang bei geschlossenem Preßformwerkzeug (10) die Formmasse (14) zusätzlich mit Druck beaufschlagt, in dem er zur Bildung einer Tasche (24) zur Aufnahme einer vorbestimmten zusätzlichen Menge der Formmasse (14) von der Innenfläche (23) des zugehörigen Formraumabschnittes in einer bestimmten Entfernung (D₁) entfernt ist und nach Befüllen des Formraumes (13) mit Formmasse (14) die zusätzliche Menge der Formmasse unter vorbestimmtem Druck in den Formraum (13) einpreßt.

## Beschreibung

Die Erfindung betrifft eine Preßform nach dem Oberbegriff des Anspruches 1.

Mit Formwerkzeugen der eingangs genannten Art werden Formpreßteile aller Art, beispielsweise auch zur Aufnahme elektrischer Geräte dienende Gehäuse hergestellt, wobei als Preßmassen thermoplastische und duroplastische Materialien, Granulate und Formteilmatten benutzt werden. Zur Verstärkung kann der Preßmasse, aus der das Formpreßteil hergestellt wird, Füllmaterial, vorzugsweise in Form von Fasermaterial, zugegeben werden. Die Formmasse wird in das beheizte Formwerkzeug eingebracht; unter Einwirkung von Druck und erhöhter Temperatur verflüssigt sich die Formmasse und paßt sich der Werkzeugform an.

Das Formwerkzeug, das aus einem Gehäuseunterteil und einem Gehäuseoberteil zusammengesetzt ist, an denen ggf. noch Schieber und dgl. zur Bildung von Ansätzen, Öffnungen oder Vertiefungen vorgesehen sind, ist im Bereich der Trennfuge zwischen dem Werkzeugunterteil und Werkzeugoberteil mit einem dazwischen befindlichen Spalt ausgerüstet, durch den hindurch die innerhalb des Werkzeuges befindliche Luft bzw. Ausgasungen beim Preßvorgang austreten können. Um zu verhindern, daß beim Preßvorgang Blasen entstehen, die z. B. die Festigkeit des Formteiles herabsetzen können, oder daß das herzustellende Formteil nicht ausgepreßt ist, weil zu wenig Formmasse eingegeben wird, ist vorgesehen, eine bestimmte Menge an Formmasse zusätzlich in das Werkzeug einzugeben, als es exakt der Raummenge bzw. dem Raumvolumen entspricht, um Toleranzen in der Gesamtmenge der Formmasse einer Füllung und ggf. auch in den Abmessungen der Form im Werkzeug ausgleichen zu können. Der Spalt ist so zu bemessen, daß die überflüssige Menge der Formmasse nach außen dringen kann. Diese zusätzliche kleine Menge, die dann durch den Spalt austritt, bildet Grate.

Diese Grate müssen, damit das Formteil verwendet werden kann, entfernt werden. Bei vergleichsweise kleinen Graten ist dies mit Bestrahlung z. B. durch Kunststoffkugeln möglich; sind die Grate dicker und größer als eine bestimmte Gratform, wie dies bei den oben beschriebenen Formwerkzeugen der Fall ist, müssen die Grate manuell abgeschnitten und danach ggf. noch verbleibende Gratteile mit einer Feile oder dgl. abgeschliffen werden.

Aufgabe der Erfindung ist es, eine Form der eingangs genannten Art zu schaffen, bei der das Entstehen von Graten im wesentlichen verhindert werden kann.

Diese Aufgabe wird durch die kennzeichnenden Merkmale des Anspruches 1 gelöst.

Erfindungsgemäß also besitzt das Formwerkzeug oder die Preßform entweder am Werkzeugoberteil oder am Werkzeugunterteil wenigstens einen Kolben, der in Richtung der Trenn- oder Schließbewegung der beiden Werkzeugteile voneinander bewegbar ist. Dieser Kolben ist zu Beginn eines Form- oder Preßvorgangs mit seiner Kolbenfläche in einer bestimmten Entfernung von dem Raum, der ausgegossen oder mit Form- oder Preßmasse anzufüllen ist, entfernt, so daß hierdurch eine Tasche gebildet wird, in die die Preßmasse einfließen kann. Diese Tasche hat eine bestimmte Größe, d. h., der Kolben ist in bestimmter Entfernung zur benachbarten raumseitigen Ebene oder Fläche des Formteiles entfernt; die Tasche, die auch als Stauraum bezeichnet werden kann, nimmt eine geringe vorbestimmte Menge an Preßmasse auf. Nachdem das Werkzeugunterteil und das Werkzeugoberteil in die zum Bilden des Formteiles richtige Stellung zueinander gebracht sind, wobei zwischen beiden ein sehr geringer Spalt vorgesehen ist, der zwar die in dem Formraum befindliche Luft und/oder während des Formvorgangs entstehende Gase austreten läßt, aber schmal oder klein genug ist, so daß er der fließfähigen Preßmasse keinen Austritt aus dem Raum gestattet, wird die Preßmasse erhitzt, so daß die Preß- oder Formmasse fließfähig wird. Die Spaltweite ist abhängig von der Dichte der Formmasse, der Temperatur und auch vom aufzubringenden Druck; sie ist demgemäß so zu bemessen, daß die Grate möglichst klein bleiben. Bei Duroplastmaterial, welches mit Fasermaterial verstärkt ist, beträgt der Spalt etwa 3/100 mm. Bei dieser Spaltweite ist ein Austritt von stark eingeschränkter, praktisch zu Null reduzierter Menge möglich.

Die Benutzung der Form ist wie folgt:
Nach Einbringen der Formmasse wird das Werkzeug geschlossen erhitzt, so daß die Formmasse fließfähig wird, anschließend der Kolben betätigt und mit Druck beaufschlagt, so daß die in der Tasche bzw. dem Stauraum befindliche zusätzliche Menge an Formmasse in den Formraum hineingedrückt wird, in dem sich das Formteil bildet. Der Druck, der auf den Kolben wirkt, kann bis zu 200 bar betragen. Dadurch, daß die zusätzliche Menge in den Formraum hineingepreßt wird, wird das vorher darin befindliche Material nachverdichtet und evtl. vorhandene Blasen, Lunker und dgl. dadurch zusammengequetscht.

Der mittels des Kolbens aufgebrachte Druck ist variabel, z. B. weg- und/oder zeitabhängig einstellbar; damit kann die Oberflächenform und ggf. der Oberflächenwiderstand so wie die Festigkeit des Formteiles beeinflußt werden. Man erhält eine deutliche Qualitätsverbesserung.

Zwar ist aus der FR-PS 2 469 270 eine Spritzform bekannt geworden, bei der in einer der Formhälften eine Öffnung mit einem darin befindlichen Kolben vorgesehen ist. Der Raum oberhalb des Kolbens entspricht praktisch identisch dem Formvolumen des Formraumes, so daß die Spritzmasse zuerst in den besagten Raum und aus diesem mittels des Kolbens in den Formraum eingebracht wird. Die Zuführöffnung, über die Spritzmasse in den Kolbenraum eingefüllt wird, besitzt einen geringen Querschnitt, so daß Füllmaterial, wie Glasfasern oder dgl. nicht durch die Öffnung hindurchgelangen kann.

Dem gegenüber besitzt der Kolbenraum bei der Erfindung erfindungsgemäß eine gegenüber dem Formvolumen geringes Volumen, so daß aus dem Kolbenraum nur eine geringe Menge an Preßmasse in den Formraum eingebracht wird.

Wenn zu wenig Formmaterial in die Form eingebracht worden ist, kann der Kolben zu tief in den Formraum hineingedrückt werden; mittels eines dem Kolben zugeordneten Wegmesser kann dies detektiert werden. Bei Erreichen einer bestimmten Eindringtiefe wird der Kolben zum Stillstand gebracht. Die Eindring- oder Eintauchtiefe ist damit ein Maß dafür, ob das Formteil den Qualitätsanforderungen entspricht oder Ausschuß ist.

Das gleiche kann auftreten, wenn die Werkzeugteile nicht in die korrekte Stellung zueinander gefahren werden und durch den Spalt zwischen beiden evtl. zu viel Formmasse austritt, oder wenn das Werkzeug beschädigt ist.

Wird zu viel Formmasse in das Werkzeug eingegeben, erreicht der Kolben seine korrekte, vorbestimmte Stellung nicht; dies kann auch zu einer Ausschußbildung führen. Daher kann die Ausschußbildung einfach an der Kolbenstellung abgelesen werden.

Die nunmehr noch bestehenden Grate brauchen nicht mehr manuell entfernt werden, sondern können mit Strahlkörpern, z. B. Kunststoffkugeln entfernt werden.

Anwendbar ist die Erfindung bei allen denjenigen Formmassen, bei denen Grate gebildet werden. Durch die Erfindung wird vermieden, Grate manuell entfernen zu müssen.

Weitere vorteilhafte Ausgestaltungen und Verbesserungen der Erfindung sind den Unteransprüchen zu entnehmen.

Anhand der Zeichnung, in der ein Ausführungsbeispiel der Erfindung dargestellt ist, soll die Erfindung näher erläutert und beschrieben werden.

Es zeigen:
- Figur 1: eine Schnittansicht durch ein Preßformwerkzeug nach dem Stand der Technik und
- Figur 2: eine Schnittansicht ähnlich der der Figur 1, eines Preßformwerkzeuges gemäß der Erfindung.

Das an sich bekannte Preßformwerkzeug 10, welches in einer entsprechenden Maschine, die nicht näher dargestellt ist, eingebaut ist, besitzt ein Werkzeugunterteil 11 und ein Werkzeugoberteil 12. Zwischen den beiden Werkzeugteilen 11 und 12 befindet sich ein Formraum 13, in den Formmasse 14 eingepreßt ist.

An der Trennebene E-E zwischen dem Werkzeugunterteil und dem Werkzeugoberteil befindet sich ein Spalt 15, dessen Spaltweite in Richtung der Trennbewegung T des Gehäuseoberteil 12 vom Gehäuseunterteil 11 t₁ beträgt. Die Menge an Formmasse 14, die in den Formraum 13 eingegeben worden ist, ist größer, als es dem Volumen des Formraumes 13 entspricht, so daß durch den Spalt 15 nicht nur die zwischen den beiden Werkzeugteilen 11 und 12 befindliche Luft und beim Pressen oder Erhärten entstehende Ausgasungen, sondern auch geringe Mengen Formmasse austreten können, die Grate 16 und 17 bilden, deren Abmessungen so groß sind, daß sie mit einfacher Bestrahlung durch Strahlkörper, wie z. B. Kunststoffkugeln nicht entfernt werden können. Die Grate 16 und 17 müssen manuell abgeschnitten und ggf. mit einem Handwerkzeug abgeschliffen und abgefeilt werden.

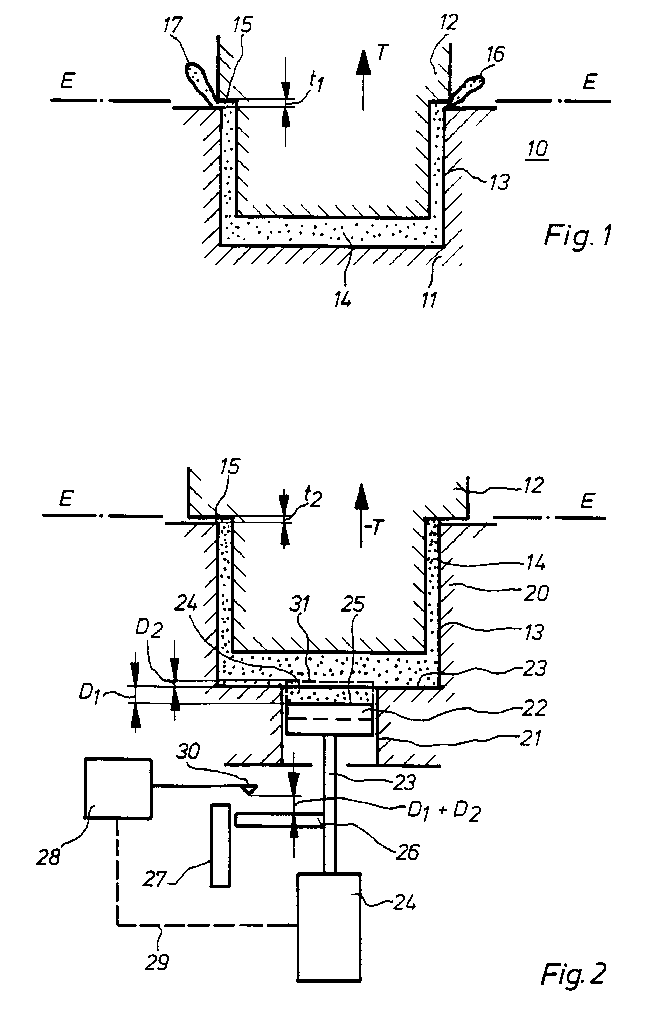

Die Figur 2 zeigt eine erfindungsgemäße Ausgestaltung. Man erkennt das Werkzeugoberteil 12, dem ein Werkzeugunterteil 20 zugeordnet ist. Das Werkzeugunterteil 20 weist die gleiche Form wie das Werkzeugunterteil 11 der Figur 1 auf. Unterschiedlich hierzu ist, daß im Werkzeugunterteil 20 eine in Richtung der Trennbewegung T verlaufende Bohrung 21 vorgesehen ist, in der ein Kolben 22 geführt ist, der über eine Kolbenstange 23 von einer Kolbenantriebseinrichtung 24, die eine hydraulische Einrichtung oder elektrische Einrichtung sein kann, angetrieben wird. In der Ausgangsstellung, die in Figur 2 dargestellt ist, also in derjenigen Stellung, in der die Werkzeuge 20 und 12 geschlossen sind, beträgt die Spaltweite des Spaltes 15 im Bereich der Trennebene E-E den Betrag t₂, der gerade so groß bemessen ist, daß entsprechend der Zähigkeit der Formmasse 14 im wesentlichen nur noch im Formraum 13 befindliche Luft oder Ausgasungen austreten können. In der Ausgangsstellung, wenn Formmasse 14 in den Formraum 13 eingegeben ist, befindet sich der Kolben 22 in einer Entfernung D₁ von der benachbarten Fläche 23 des Formraumes 13, so daß hier eine Tasche 24 gebildet ist, die der Aufnahme einer zum Ausgleich von Toleranzen dienenden zusätzliche Menge an Formmasse dient. Nun wird der Kolben 23 von der Kolbenantriebseinrichtung 24 in Richtung T zu der Fläche 23 hin in Bewegung gesetzt, wobei die im Formraum 13 befindliche Formmasse 14 verdichtet wird. Der Abstand D₁ soll so bemessen sein, daß in der End-Nennstellung die größere, freie Kolbenfläche 25 sich genau in der Fläche 23 befindet. Wollte man an der Fläche 23 einen erhabenen Bereich vorsehen, auf den beispielsweise Kennschilder aufgeklebt werden, dann könnte die End-Nennstellung des Kolbens einen gewissen Abstand zur Fläche 23 einnehmen.

An der Kolbenstange 23 befindet sich ein Ansatz 26, der mit einer Wegmeßeinrichtung 27 zusammenwirkt, an der bzw. mit der die Bewegung und die vom Kolben aus der Ausgangsstellung beim Formvorgang zurückgelegte Wegstrecke detektiert werden kann. Zusätzlich kann ein Endschalter 28 vorgesehen sein, der die Überschreitung der End-Nennstellung um ein Maß D₂ detektiert und über eine Wirklinie 29 die Antriebseinrichtung 24 außer Betrieb setzt; der Weg zwischen dem Ansatz 26 und einer Meßfahne 30 des Endschalters 28 beträgt ebenfalls D₁ + D₂.

Erreicht also der Kolben 22 eine Stellung, die in der Figur 2 durch strichlierte Linien 31 dargestellt ist, in der der Kolben in den Formraum 13 eingedrungen ist, wobei die Eindringtiefe D₂ beträgt, wird über den Endschalter 28 die Antriebseinrichtung 24 außer Betrieb gesetzt. Dadurch kann sofort beim Preßvorgang oder Formvorgang detektiert werden, ob das Formteil Ausschuß oder nicht Ausschuß ist.

Aufgrund der Spaltweite t₂ der Spalte bzw. des Spaltes 15 befindet sich am Formteil, nach Aushärten der Formmasse 14, ein sehr kleiner Grat (nicht dargestellt), der durch Bestrahlung mit Strahlkörpern, z. B. mit Kunststoffkugeln einfach maschinell entfernt werden kann.

Das erfindungsgemäße Preßformwerkzeug besitzt also nur noch einen Minimalspalt zwischen den beiden Formhälften oder Formteilen, durch den hindurch Luft und Gase aus dem Herstellprozeß entweichen können, die in dem Preßformwerkzeug befindliche Formmasse jedoch nicht.

Durch die Aufbringung des Drucks durch den Kolben zusätzlich zu dem durch die Werkzeugteile schon erzeugten Druck entsteht im Formraum, d. h. innerhalb der Formmasse eine homogene Druckverteilung. Durch diese Art Nachverdichtung erhöht sich die mechanische Festigkeit erheblich; man kann geringere Wandstärken vorsehen, wodurch Einsparungen bei Material- und Herstellkosten gegeben sind.

Stellt man mit dem erfindungsgemäßen Werkzeug, z. B. ein Gehäuse für ein elektrisches Schaltgerät her, dann kann der Oberflächenwiderstand, die Durchschlagsfestigkeit, die Leckage etc. in ihren Streubreiten deutlich verringert werden, so daß die nach der Norm geforderten Werte sehr genau erreicht werden. Durch entsprechende Drucksteuerung des Kolbens während des Nachverdichtungsvorganges ist auch die Verarbeitung von sog. Problemwerkstoffen möglich.

Das Erreichen der Endstellung des Kolbens innerhalb des Formvorgangs gibt auch Aufschluß über die erreichte Teilequalität:
- Kolben zu weit oben - Formteil nicht ausgeformt
- Kolben zu weit unten - Formmasse überdimensioniert.

In obiger Beschreibung ist lediglich ein Kolbenraum dargestellt; es ist selbstverständlich möglich, daß mehr als ein Kolbenraum vorgesehen ist. Ggf. können bis zu vier oder bei großen Gehäusen auch mehr Kolbenräume vorhanden sein.

## Patentansprüche

1. Preßformwerkzeug zur Herstellung eines Preßteiles, insbesondere eines Gehäuses, aus einer aushärtbaren, fließfähigen, vorzugsweise Füllmaterial enthaltenden Formmasse, mit einem Werkzeugunterteil und einem Werkzeugoberteil, die zwischen sich einen dem Preßteil entsprechenden, im wesentlichen abgedichteten Preßraum freilassen, in den die fließfähige, aushärtbare Preßmasse einfügbar ist, die in dem geschlossenen Preßformwerkzeug aushärtet, dadurch gekennzeichnet, daß im Werkzeugunter- und -oberteil (11, 12; 20) wenigstens eine in Richtung der Trennbewegung (T) des Werkzeugunter- und -oberteils (11, 12; 20) gegeneinander verlaufende Öffnung (21) vorgesehen ist, in der ein Kolben (22) geführt ist, der beim Preßvorgang bei geschlossenem Preßformwerkzeug die Preßmasse zusätzlich mit Druck beaufschlagt, und daß die oberhalb des Kolbens (22) gebildete Tasche (24) zur Aufnahme einer bestimmten Menge der Preßmasse (14) in ihrem Volumen so bemessen ist, daß nach Befüllung des Preßraumes (13) mit der Preßmasse lediglich eine zusätzliche Menge der Preßmasse unter vorbestimmtem Druck in den Preßraum (13) einpreßbar ist.

2. Preßformwerkzeug nach Anspruch 1, dadurch gekennzeichnet, daß dem Kolben ein Wegmesser (27) zugeordnet ist, der die Bewegung des Kolbens (22) und die vom Kolben (22) zurückgelegte Wegstrecke mißt.

3. Preßformwerkzeug nach Anspruch 2, dadurch gekennzeichnet, daß dem Kolben (22) ein Endschalter zugeordnet ist, der die Kolbenbewegung bei Erreichen einer vorbestimmten Kolbenstellung oder nach Durchfahren einer bestimmten Wegstrecke zum Stillstand bringt.
